(19) Europäisches Patentamt
European Patent Office
Office européen des brevets

(11) **EP 3 192 766 B1**

(12) **EUROPEAN PATENT SPECIFICATION**

(45) Date of publication and mention
of the grant of the patent:
**08.07.2020  Bulletin 2020/28**

(51) Int Cl.:
**B66D 1/50** *(2006.01)*      **B63B 21/16** *(2006.01)*

(21) Application number: **16151423.7**

(22) Date of filing: **15.01.2016**

(54) **METHOD FOR OPERATING WINCH, AND WINCH**

VERFAHREN ZUM BETREIBEN EINER WINDE UND WINDE

PROCÉDÉ POUR FAIRE FONCTIONNER UN TREUIL ET TREUIL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**19.07.2017  Bulletin 2017/29**

(73) Proprietor: **ABB Schweiz AG
5400 Baden (CH)**

(72) Inventors:
 • **Holmberg, Mikael
  00380 Helsinki (FI)**
 • **Tiihonen, Risto
  00380 Helsinki (FI)**
 • **Rodas, Michael
  00380 Helsinki (FI)**

(74) Representative: **Kolster Oy Ab
(Salmisaarenaukio 1)
P.O. Box 204
00181 Helsinki (FI)**

(56) References cited:
**EP-A1- 2 385 011      GB-A- 1 212 442
US-A1- 2010 116 191**

**Description**

FIELD OF THE INVENTION

The invention relates to operating a winch, in particular a winch comprising a winch drum for spooling a spoolable medium for mooring a vessel, and to a winch.

BACKGROUND OF THE INVENTION

Winches can be used for mooring a vessel. Such a vessel may be a ship, a boat or generally a craft designed for water transportation in a sea, an ocean, a lake, a river, a channel, a canal, or any parts thereof, for example.

Such a winch used for the mooring may comprise a winch drum which is rotatable about an axis of rotation thereof and may be used for spooling a spoolable medium, which is to be connected to a point of mooring. The spoolable medium may comprise a cable, a rope, a wire or a chain, for example. The point of mooring may be any point where the vessel can be moored, such as a mooring-post of a vessel landing place, e.g. a port or a pier, or an anchor or a buoy, for example. The winch used for the mooring may further comprise an electric motor drive comprising an electric motor, which is configured to rotate the winch drum about the axis of rotation thereof during spooling in or spooling out of the spoolable medium. The electric motor drive can be an AC drive or a DC drive and the electric motor can be an AC motor, such as an asynchronous motor (induction motor) or a synchronous motor, or a DC motor, respectively, for example.

In a vessel, the mooring functionality of the winch used for mooring can control the spoolable medium that holds the vessel in place at the point of mooring by means of the electric motor drive. When the vessel is being moored, the tension of the spoolable medium between the vessel and the point of mooring can be automatically adjusted by suitably controlling the electric motor drive that controls the winch used for mooring. The tension of the spoolable medium between the vessel and a point of mooring should be kept at an appropriate level. If the spoolable medium between the vessel and the point of mooring is too loose, the vessel will not stay in place, and if the spoolable medium is too tight, the spoolable medium might break or the operation might become unstable.

The electric drive can be controlled such that when the tension of the spoolable medium between the vessel and a point of mooring is outside a predetermined hysteresis zone, the spoolable medium is either tightened (spooled in) or loosened (spooled out) at a predetermined constant driving speed of the winch drum towards a predetermined tension set point. And when the tension of the spoolable medium between the vessel and the point of mooring has been inside a predetermined dead band zone, located within the hysteresis zone, for a certain predetermined period of time, the tightening or loosening is stopped.

EP2385011 discloses an electrically driven mooring winch. The mooring winch comprises a winding drum, an alternating current motor arranged to drive the winding drum, a frequency conversion unit connected to the alternating current motor, and a control unit arranged to control the frequency conversion unit on the basis of an indicator for tension of the mooring rope. The control unit is arranged to set a reference value of rotational speed of the ac motor to a predetermined value, to drive the ac motor in one direction for a predetermined time interval, to define a first value of a torque of the motor, and to drive the ac motor in an opposite direction for the predetermined interval, to define a second value of the torque of the motor, and to compute a torque estimate using the first and the second value of the torque. The control unit is arranged to make the alternating current motor to wind the mooring rope in as a response to a situation in which the torque estimate goes below a first pre-determined hysteresis limit value, and to make the alternating current motor to wind the mooring rope out as a response to a situation in which the torque estimate exceeds a second pre-determined hysteresis limit value. According to an embodiment, the reference value of rotational speed of the alternating current motor is set to zero as a response to a situation in which the torque estimate is within a pre-determined range, the pre-determined range being around a pre-determined set value of torque. According to an embodiment, the reference value of rotational speed of the alternating current motor is set to zero as a response to a situation in which a pre-determined delay has elapsed after the torque estimate entered the pre-determined range.

Controlling the adjustment of the spoolable medium smoothly close to the predetermined tension set point is desirable. However, in the above solution, oscillations around the predetermined tension set point can easily occur and resulting sudden stops can be harmful to the mechanics of the winch and the spoolable medium, for example.

BRIEF DESCRIPTION OF THE INVENTION

The object of the invention is thus to provide a method and an apparatus for implementing the method so as to solve or at least alleviate the above problem. The object of the invention is achieved with a method, a computer program product, and a winch that are characterized by what is stated in the independent claims. Preferred embodiments of the invention are described in the dependent claims.

The invention is based on the idea that an absolute value of the driving speed of the winch, when spooling in or out the spoolable medium, is set proportional to an absolute value of a difference between a monitored tension of the spoolable medium between the vessel and a point of mooring and a predetermined tension set point, at least when the monitored tension of the spoolable medium is inside a predetermined dead band zone.

An advantage of the invention is that the tension control of the spoolable medium around the predetermined tension set point is smooth and well-controlled. Moreover, such proportional speed control will reduce any oscillations around the predetermined tension set point. This can improve the reliability of the operation of the winch and extend the lifetime of the spoolable medium.

BRIEF DESCRIPTION OF THE FIGURES

In the following, the invention will be described in more detail in connection with preferred embodiments with reference to the accompanying drawings, in which

Figure 1 illustrates a diagram of a winch according to an embodiment;
Figure 2 illustrates tension and speed diagrams according to an embodiment; and
Figure 3 illustrates speeds in different tension regions according to an embodiment.

DETAILED DESCRIPTION OF THE INVENTION

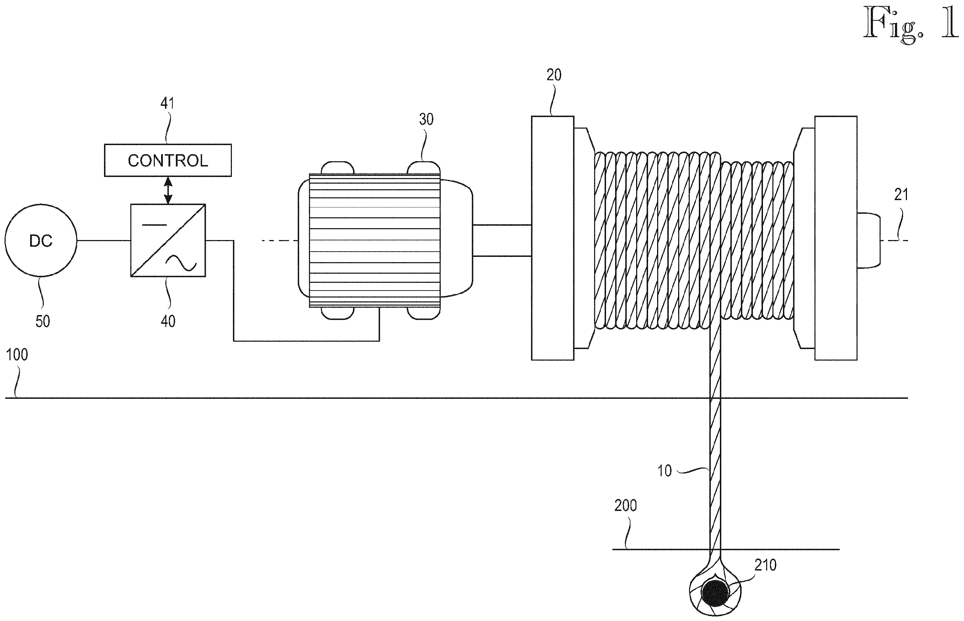

Figure 1 illustrates a simplified diagram of a winch that can be used for mooring a vessel according to an embodiment. The figure only shows components necessary for understanding the various embodiments. The exemplary winch comprises a winch drum 20 for spooling a spoolable medium 10, which winch drum is rotatable about an axis of rotation 21. The spoolable medium 10 may be a cable, a rope, a wire or a chain, for example. In the example of Figure 1, the winch further comprises a winch drive, in this example an electric drive comprising an electric motor 30, with which the winch drum 20 can be rotated. The electric motor 30 driving the winch drum 20 can be of any type, such as an asynchronous AC motor, such as an induction motor, a synchronous AC motor or a DC motor. Possible examples of the synchronous AC motor include non-excited motors, such as a reluctance motor, a hysteresis motor and a permanent magnet motor, and DC-excited motors, for example. It should be noted that the use of the embodiments described herein is not limited to systems employing any specific fundamental frequency or any specific voltage level, for example. In the example of Figure 1, the electric motor 30 is an induction motor and the electric dive further comprises an inverter 40 for feeding the electric motor 30 from a DC power supply 50. An inverter is a device used, for instance, for controlling a motor. The control of the electric motor 30 may be implemented reliably by means of the inverter 40 in such a manner that the motor 30 accurately implements a desired speed or torque instruction, for example. The exemplary embodiment further comprises a separate control unit 41 of the electric drive which may be used to control the inverter 40 and, thus, the electric motor 30 and to operate the winch. The control unit 41 may also be a part of the inverter 40 or some other unit, for example. The control unit 41 may comprise suitable I/O (Input-Output) means, such as a keyboard and display unit or another separate terminal unit, which may be connected to the control unit 41 in a wired or wireless manner. Thus, an operator or user of the system can operate the winch through the I/O means.

Figure 1 further illustrates a fixing point 210 for the spoolable medium 10, wherein the end of the spoolable medium 10 is to be fixed to the fixing point 210 during the mooring of the vessel. According to an embodiment, the winch 20, 30, 40, 41 used for the mooring of the vessel can be located in the vessel. In that case the fixing point 210 for the spoolable medium 10 is located at the point of mooring, such as a mooring-post of a vessel landing place, e.g. a port or a pier, or an anchor or a buoy, for example. According to this alternative, reference numeral 100 in Figure 1 refers to the vessel and reference numeral 200 refers to the point of mooring. According to an alternative embodiment, the winch 20, 30, 40, 41 used for mooring the vessel can be located in the point of mooring, i.e. outside of the vessel. In that case the fixing point 210 for the spoolable medium 10 is located in the vessel. According to this alternative embodiment, reference numeral 200 in Figure 1 refers to the vessel and reference numeral 100 refers to the point of mooring.

According to an embodiment, a winch for mooring a vessel can be operated as follows. A tension of the spoolable medium 10 between the vessel and a point of mooring is monitored. According to an embodiment, the tension of the spoolable medium 10 between the vessel and a point of mooring can be monitored by monitoring a torque of the electric motor 30. According to an embodiment, the torque of the electric motor 30 can be monitored by monitoring a current of the electric motor. It also possible to monitor the tension of the spoolable medium 10 between the vessel and a point of mooring utilizing some other quantities indicative of the tension of the spoolable medium 10. The monitoring of the tension of the spoolable medium 10 between the vessel and a point of mooring can be performed by the winch drive, e.g. by the control unit 41 thereof, or some other possible separate device or system. Then, in response to the monitored tension of the spoolable medium becoming higher than a first upper tension threshold or lower than a first lower tension threshold, initiating, either immediately or after a first predetermined delay, driving of the winch drum 20. According to an embodiment, during the driving of the winch drum 20, when the monitored tension of the spoolable medium 10 is higher than a predetermined tension set point, which has a value between the first upper tension threshold and the first lower tension threshold, the winch drum 20 is driven in such a direction that the spoolable medium 10 is spooled out, and, when the monitored tension of the spoolable medium 10 is lower than the predetermined tension set point, the winch drum 20 is driven in such a direction that the spoolable medium is spooled in. In other words, if the monitored tension of the spoolable medium 10 deviates from the predetermined tension set point during the driving of the winch drum 20, the winch drum 20 is preferably driven into such direction in which the monitored tension of the spoolable medium tends to approach the predetermined tension set point. Moreover, according to an embodiment, during the driving of the winch drum 20, at least when the monitored tension of the spoolable medium 10 is between a second upper tension threshold, which has a value equal to or lower than the first upper tension threshold but higher than the predetermined tension set point, and a second lower tension threshold, which has a value equal to or higher than the first lower tension threshold but lower than the predetermined tension set point, an absolute value of the driving speed of the winch drum has a value, which is proportional to an absolute value of a difference between the monitored tension of the spoolable medium and the predetermined tension set point. And, in response to the monitored tension of the spoolable medium 10 being, during the driving of the winch drum 20, between the second upper tension threshold and the second lower tension threshold for a second predetermined delay, stopping the driving of the winch drum 20. The values of the first upper tension threshold T1u, the first lower tension threshold T1l, the second upper tension threshold T2u, and the second lower tension threshold T2l depend on the system characteristics and may thus vary.

When the monitored tension of the spoolable medium 10 is higher than the second upper tension threshold, or when the monitored tension of the spoolable medium 10 is lower than the second lower tension threshold, the absolute value of the driving speed of the winch drum 20 could also have a value that is proportional to an absolute value of a difference between the monitored tension of the spoolable medium and the predetermined tension set point. Alternatively, according to an embodiment, during the driving of the winch drum 20, when the monitored tension of the spoolable medium 10 is higher than the second upper tension threshold, or when the monitored tension of the spoolable medium 10 is lower than the second lower tension threshold, the absolute value of the driving speed of the winch drum 20 has a value that is a predetermined constant after the driving speed of the winch drum has reached said predetermined constant driving speed. In this case, there may be an initial period where the driving speed is gradually increased to said predetermined constant value after which the driving speed is kept at said constant value. Said constant value may be the maximum driving speed of the winch drum or a fraction thereof, for example. Using such essentially constant driving speed instead of a variable speed based on the difference between the monitored tension of the spoolable medium and the predetermined tension set point, when the tension of the spoolable medium 10 is higher than the second upper tension threshold or lower than the second lower tension threshold may be advantageous in order to initially provide a higher speed of spooling, for example.

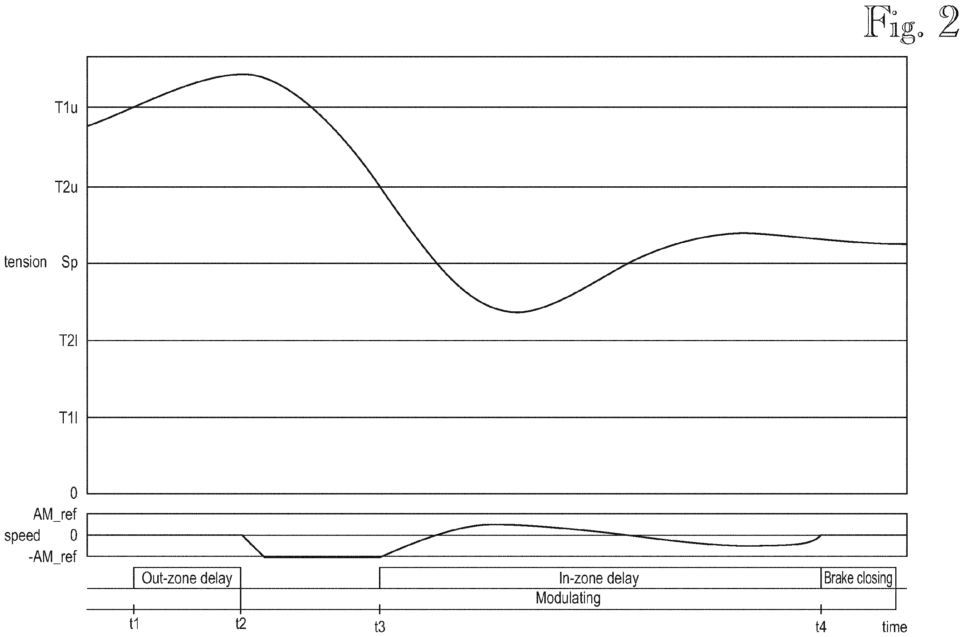

Figure 2 illustrates an example of tension and speed diagrams according to an embodiment. In the example of Figure 2 the tension of the spoolable medium 10 goes outside the zone (hysteresis zone) defined between the first upper tension threshold T1u and the first lower tension threshold T1l by exceeding the first upper tension threshold T1u at time point t1. In this example the driving of the winch drum 20 is not initiated immediately thereafter but only after the first predetermined delay (Out-Zone delay). The first predetermined delay, if applied, may be a few seconds or a few tens of seconds depending on system characteristics, for example, and preferably it is between 0 and 20 s, more preferably 2 s to 10 s. After the first predetermined delay, at time point t2 the driving of the winch drum 20 is initiated and set, optionally gradually, at a constant speed -AM_ref. In this example the negative sign of the speed of the winch drum indicates that the spoolable medium 10 is spooled out. As a result, the tension of the spoolable medium 10 starts to gradually approach the predetermined tension set point Sp. At time point t3 the tension of the spoolable medium 10 enters the zone (dead band zone) defined between the second upper tension threshold T2u and the second lower tension threshold T2l. As a result, the absolute value of the driving speed of the winch drum 20 has a value that is proportional to the absolute value of the difference between the monitored tension of the spoolable medium and the predetermined tension set point Sp. The value of the driving speed of the winch drum 20 then varies between the maximum positive and negative speeds AM_ref, -AM_ref depending on the difference between the monitored tension of the spoolable medium and the predetermined tension set point Sp. After the second predetermined delay (In-Zone delay) after entering the zone defined between the second upper tension threshold T2u and the second lower tension threshold T2l, i.e. at time point t4, the driving of the winch drum 20 is stopped. The stopping of the driving of the winch drum 20 may include controlling the speed of the winch drum 20 to zero with suitable modulation control by the inverter 40 and/or braking the winch drum 20 with a brake. The second predetermined delay may be a few seconds or a few tens of seconds depending on system characteristics, for example, and preferably it is between 5 s and 100 s, more preferably 15 s to 60 s.

According to an embodiment, the absolute value of the driving speed of the winch drum may be determined according to the following equations:

a) when the monitored tension of the spoolable medium is between the second upper tension threshold T2u and the predetermined tension set point Sp:

$$|Ref| = AM\_ref*([|Rt-Sp|]/[|T2u-Sp|]), \text{ and} \qquad (1)$$

b) when the monitored tension of the spoolable medium is between the second lower tension threshold T2l and the predetermined tension set point Sp:

$$|Ref| = AM\_ref*([|Rt-Sp|]/[|T2l-Sp|]), \qquad (2)$$

where:

Ref      the driving speed of the winch drum
AM_ref      a predetermined constant
Rt      the monitored tension of the spoolable medium
Sp      the predetermined tension set point
T2u      the second upper tension threshold
T2l      the second lower tension threshold.

Thus, according to equations 1 and 2, when the monitored tension of the spoolable medium 10 is between the second upper tension threshold and the second lower tension threshold, the absolute value of the driving speed of the winch drum can be directly proportional to the absolute value of the difference between the monitored tension of the spoolable medium and the predetermined tension set point. It should be noted that the invention is not limited to the above form of equations 1 and 2 but they could vary. For example, the right hand sides of equations 1 and 2 could comprise a positive factor q whose value deviates from 1, i.e. q>0 and q#1. Moreover, the absolute value of the driving speed of the winch drum could alternatively be exponentially or logarithmically proportional to the absolute value of the difference between the monitored tension of the spoolable medium and the predetermined tension set point, for example.

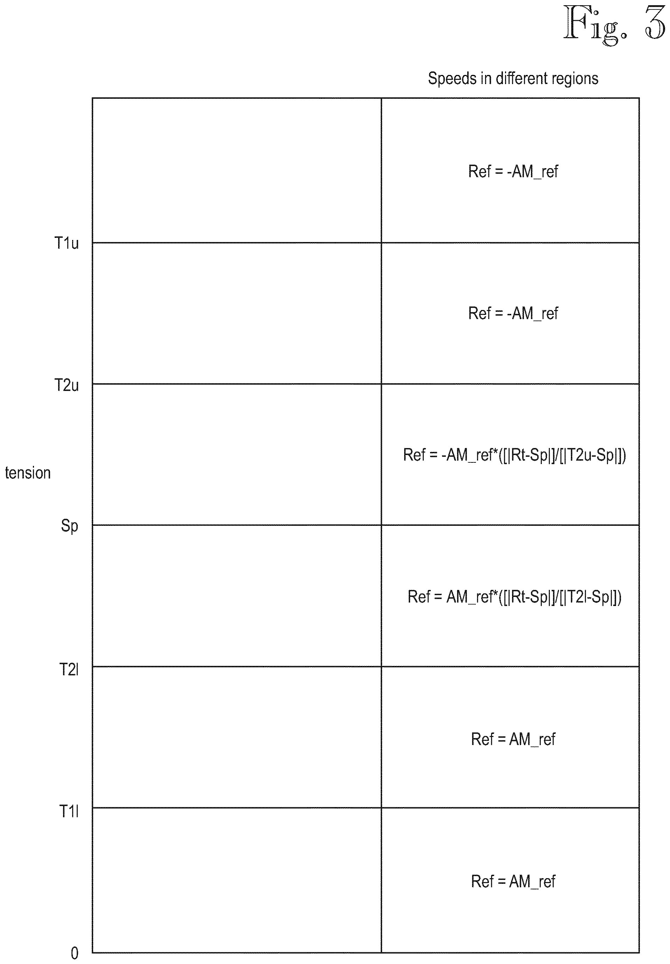

Figure 3 illustrates, according to an embodiment, speed settings in different regions of the tension of the spoolable medium 10 between the vessel and the point of mooring when the winch drum 20 is being driven. According to this example, when the tension is higher than the second upper tension threshold T2u, the speed setting is -AM_ref, i.e. spooling out. Between the second upper tension threshold T2u and the predetermined tension set point Sp, the speed setting is -AM_ref*([|Rt-Sp|]/[|T2u-Sp|]), i.e. spooling out. Between the second lower tension threshold T2l and the predetermined tension set point Sp, the speed setting is AM_ref*([|Rt-Sp|]/[|T2l-Sp|]), i.e. spooling in. And, when the tension is lower than the second lower tension threshold T2l, the speed setting is AM_ref, i.e. spooling in.

An apparatus implementing the control functions according to any one of the above embodiments, or a combination thereof, may be implemented as one unit or as two or more separate units that are configured to implement the functionality of the various embodiments. Here the term 'unit' refers generally to a physical or logical entity, such as a physical device or a part thereof or a software routine. One or more of these units, such as the control unit 41, may reside in an electric drive or a component thereof such as the inverter 40, for example.

An apparatus, such as the control unit 41, according to any one of the embodiments may be implemented at least partly by means of one or more computers or corresponding digital signal processing (DSP) equipment provided with suitable software, for example. Such a computer or digital signal processing equipment preferably comprises at least a working memory (RAM) providing storage area for arithmetical operations and a central processing unit (CPU), such as a general-purpose digital signal processor. The CPU may comprise a set of registers, an arithmetic logic unit, and a CPU control unit. The CPU control unit is controlled by a sequence of program instructions transferred to the CPU from the RAM. The CPU control unit may contain a number of microinstructions for basic operations. The implementation of microinstructions may vary depending on the CPU design. The program instructions may be coded by a programming language, which may be a high-level programming language, such as C, Java, etc., or a low-level programming language, such as a machine language, or an assembler. The computer may also have an operating system which may provide system services to a computer program written with the program instructions. The computer or other apparatus implementing the invention, or a part thereof, may further comprise suitable input means for receiving e.g. measurement and/or control data, and output means for outputting e.g. control data. It is also possible to use a specific integrated circuit or circuits, or discrete electric components and devices for implementing the functionality according to any one of the embodiments.

The invention according to any one of the embodiments, or any combination thereof, can be implemented in

**EP 3 192 766 B1**

existing system elements, such as electric drives or components thereof, such as inverters or frequency converters, or similar devices, or by using separate dedicated elements or devices in a centralized or distributed manner. Present devices for electric drives, such as inverters and frequency converters, typically comprise processors and memory that can be utilized in the functions according to embodiments of the invention. Thus, all modifications and configurations required for implementing an embodiment of the invention e.g. in existing devices may be performed as software routines, which may be implemented as added or updated software routines. If the functionality of the invention is implemented by software, such software can be provided as a computer program product comprising computer program code which, when run on a computer, causes the computer or corresponding arrangement to perform the functionality according to the invention as described above. Such a computer program code may be stored or generally embodied on a computer readable medium, such as suitable memory, e.g. a flash memory or a disc memory from which it is loadable to the unit or units executing the program code. In addition, such a computer program code implementing the invention may be loaded to the unit or units executing the computer program code via a suitable data network, for example, and it may replace or update a possibly existing program code.

It is obvious to a person skilled in the art that as technology advances, the basic idea of the invention can be implemented in a variety of ways. Consequently, the invention and its embodiments are not restricted to the above examples, but can vary within the scope of the claims.

**Claims**

1.  A method for operating a winch comprising a winch drum (20) for spooling a spoolable medium (10) for mooring a vessel, the method comprising:

    monitoring a tension of the spoolable medium (10) between the vessel and a point of mooring;
    in response to the monitored tension of the spoolable medium (10) becoming higher than a first upper tension threshold (T1u) or lower than a first lower tension threshold (T1l), initiating, either immediately or after a first predetermined delay, driving of the winch drum (20),

        wherein, during the driving of the winch drum (20), when the monitored tension of the spoolable medium (10) is higher than a predetermined tension set point (Sp), which has a value between the first upper tension threshold and the first lower tension threshold, the winch drum is driven in such a direction that the spoolable medium is spooled out, and
        wherein, during the driving of the winch drum (20), when the monitored tension of the spoolable medium (10) is lower than the predetermined tension set point (Sp), the winch drum is driven in such a direction that the spoolable medium is spooled in; and

    in response to the monitored tension of the spoolable medium (10) being, during the driving of the winch drum (20), between the second upper tension threshold (T2u) and the second lower tension threshold (T2l) for a second predetermined delay, stopping the driving of the winch drum, **characterized in that**
    during the driving of the winch drum (20), at least when the monitored tension of the spoolable medium (10) is between a second upper tension threshold (T2u), which has a value equal to or lower than the first upper tension threshold (T1u) but higher than the predetermined tension set point (Sp), and a second lower tension threshold (T2l), which has a value equal to or higher than the first lower tension threshold (T1l) but lower than the predetermined tension set point (Sp), an absolute value of the driving speed of the winch drum has a value that is proportional to an absolute value of a difference between the monitored tension of the spoolable medium and the predetermined tension set point (Sp).

2.  A method as claimed in claim 1, wherein, during the driving of the winch drum (20), when the monitored tension of the spoolable medium (10) is higher than the second upper tension threshold (T2u), or when the monitored tension of the spoolable medium (10) is lower than the second lower tension threshold (T2l), the absolute value of the driving speed of the winch drum has a value that is a predetermined constant after the driving speed of the winch drum has reached said predetermined constant driving speed.

3.  A method as claimed in claim 1 or 2, wherein the value of the absolute value of the driving speed of the winch drum (20) is determined according to the following equations:

    when the monitored tension of the spoolable medium is between the second upper tension threshold and the predetermined tension set point:

6

$$|Ref| = AM\_ref*([|Rt-Sp|]/[|T2u-Sp|]),$$

and
when the monitored tension of the spoolable medium is between the second lower tension threshold and the predetermined tension set point:

$$|Ref| = AM\_ref*([|Rt-Sp|]/[|T2l-Sp|]),$$

where:

Ref the driving speed of the winch drum
AM_ref a predetermined constant
Rt the monitored tension of the spoolable medium
Sp the predetermined tension set point
T2u the second upper tension threshold
T2l the second lower tension threshold.

4. A method as claimed in claim 1, 2 or 3, wherein the winch drum (20) is driven by an electric motor (30).

5. A method as claimed in claim 4, wherein the tension of the spoolable medium (10) between the vessel and a point of mooring is monitored by monitoring a torque of the electric motor (30).

6. A method as claimed in claim 5, wherein the torque of the electric motor (30) is monitored by monitoring a current of the electric motor.

7. A computer program product comprising computer program code, wherein execution of the program code in a computer controlling an electric drive of a winch for driving a winch drum of the winch for spooling a spoolable medium for mooring a vessel causes the computer to carry out the steps of the method according to any one of claims 1 to 6.

8. A winch comprising:

a winch drum (20) for spooling a spoolable medium (10) for mooring a vessel; and
a winch drive (30, 40, 41) for driving the winch drum, the winch drive being configured to:

monitor a tension of the spoolable medium (10) between the vessel and a point of mooring;
in response to the monitored tension of the spoolable medium (10) becoming higher than a first upper tension threshold or lower than a first lower tension threshold, initiate, either immediately or after a first predetermined delay, driving of the winch drum (20),

wherein, during the driving of the winch drum (20), when the monitored tension of the spoolable medium (10) is higher than a predetermined tension set point, which has a value between the first upper tension threshold and the first lower tension threshold, the winch drive is configured to drive the winch drum in such a direction that the spoolable medium is spooled out, and
wherein, during the driving of the winch drum (20), when the monitored tension of the spoolable medium (10) is lower than the predetermined tension set point, the winch drive is configured to drive the winch drum in such a direction that the spoolable medium is spooled in; and

in response to the monitored tension of the spoolable medium (10) being, during the driving of the winch drum (20), between the second upper tension threshold and the second lower tension threshold for a second predetermined delay, stop the driving of the winch drum, **characterized in that**
during the driving of the winch drum (20), at least when the monitored tension of the spoolable medium (10) is between a second upper tension threshold, which has a value equal to or lower than the first upper tension threshold but higher than the predetermined tension set point, and a second lower tension threshold, which has a value equal to or higher than the first lower tension threshold but lower than the predetermined tension set point, an absolute value of the driving speed of the winch drum is configured to have a value that is proportional to an absolute value of a difference between the monitored tension of the spoolable medium and the predetermined tension set point.

9. A winch as claimed in claim 8, wherein, during the driving of the winch drum (20), when the monitored tension of the spoolable medium (10) is higher than the second upper tension threshold or when the monitored tension of the spoolable medium (10) is lower than the second lower tension threshold, the absolute value of the driving speed of the winch drum is configured to have a value, which is a predetermined constant after the driving speed of the winch drum has reached said predetermined constant driving speed.

10. A winch as claimed in claim 8 or 9, wherein the winch drive (30, 40, 41) is configured to determine the second value of the absolute value of the driving speed of the winch drum (20) according to the following equations:

when the monitored tension of the spoolable medium is between the second upper tension threshold and the predetermined tension set point:

$$|Ref| = AM\_ref*([|Rt\text{-}Sp|]/[|T2u\text{-}Sp|]),$$

and
when the monitored tension of the spoolable medium is between the second lower tension threshold and the predetermined tension set point:

$$|Ref| = AM\_ref*([|Rt\text{-}Sp|]/[|T2l\text{-}Sp|]),$$

where:

Ref the driving speed of the winch drum
AM_ref a predetermined constant
Rt the monitored tension of the spoolable medium
Sp the predetermined tension set point
T2u the second upper tension threshold
T2l the second lower tension threshold.

11. A winch as claimed in claim 8, 9 or 10, wherein the winch drive (30, 40, 41) comprises an electric motor (30) for driving the winch drum.

12. A winch as claimed in claim 11, wherein the winch drive (30, 40, 41) is configured to monitor the tension of the spoolable medium (10) between the vessel and a point of mooring by monitoring a torque of the electric motor (30).

13. A winch as claimed in claim 12, wherein the winch drive (30, 40, 41) is configured to monitor the torque of the electric motor (30) by monitoring a current of the electric motor.

14. A winch as claimed in any one of claims 11 to 13, wherein the electric motor (30) is an AC motor or a DC motor.

15. A winch as claimed in any one of claims 8 to 14, wherein the spoolable medium (10) is a cable, a rope, a wire or a chain.

**Patentansprüche**

1. Verfahren zum Betreiben einer Winde umfassend eine Windentrommel (20) zum Aufwickeln eines aufwickelbaren Mediums (10) zum Festmachen eines Schiffes, wobei das Verfahren umfasst:

Überwachen einer Spannung des aufwickelbaren Mediums (10) zwischen dem Schiff und einer Festmachestelle; als Reaktion darauf, dass die überwachte Spannung des aufwickelbaren Mediums (10) höher als eine erste obere Spannungsschwelle (T1u) oder niedriger als eine erste untere Spannungsschwelle (T1l) wird, Einleiten des Antreibens der Windentrommel (20) entweder sofort oder nach einer ersten vorbestimmten Verzögerung, wobei beim Antreiben der Windentrommel (20), wenn die überwachte Spannung des aufwickelbaren Mediums (10) höher als ein vorbestimmter Spannungssollwert (Sp) ist, der einen Wert zwischen der ersten oberen Spannungsschwelle und der ersten unteren Spannungsschwelle aufweist, die Windentrommel in einer Richtung angetrieben wird, in der das aufwickelbare Medium abgewickelt wird, und

wobei beim Antreiben der Windentrommel (20), wenn die überwachte Spannung des aufwickelbaren Mediums (10) niedriger als der vorbestimmte Spannungssollwert (Sp) ist, die Windentrommel in einer Richtung angetrieben wird, in der das aufwickelbare Medium aufgewickelt wird; und

als Reaktion darauf, dass die überwachte Spannung des aufwickelbaren Mediums (10) beim Antreiben der Windentrommel (20) für eine zweite vorbestimmte Verzögerung zwischen dem zweiten oberen Spannungsschwellenwert (T2u) und dem zweiten unteren Spannungsschwellenwert (T2l) liegt, Anhalten des Antreibens der Windentrommel, **dadurch gekennzeichnet, dass**

beim Antreiben der Windentrommel (20), mindestens wenn die überwachte Spannung des aufwickelbaren Mediums (10) zwischen einer zweiten oberen Spannungsschwelle (T2u), die einen Wert gleich oder niedriger als die erste obere Spannungsschwelle (T1u), aber höher als der vorbestimmte Spannungssollwert (Sp) aufweist, und einer zweiten unteren Spannungsschwelle (T2l) liegt, die einen Wert gleich oder größer als die erste untere Spannungsschwelle (T1l), aber niedriger als der vorbestimmte Spannungssollwert (Sp) aufweist, ein Absolutwert der Antriebsgeschwindigkeit der Windentrommel einen Wert aufweist, der proportional zu einem Absolutwert einer Differenz zwischen der überwachten Spannung des aufwickelbaren Mediums und dem vorbestimmten Spannungssollwert (Sp) ist.

2. Verfahren nach Anspruch 1, wobei beim Antreiben der Windentrommel (20), wenn die überwachte Spannung des aufwickelbaren Mediums (10) höher als die zweite obere Spannungsschwelle (T2u) ist, oder wenn die überwachte Spannung des aufwickelbaren Mediums (10) niedriger als die zweite untere Spannungsschwelle (T2l) ist, der Absolutwert der Antriebsgeschwindigkeit der Windentrommel einen Wert aufweist, der eine vorbestimmte Konstante ist, nachdem die Antriebsgeschwindigkeit der Windentrommel die vorbestimmte konstante Antriebsgeschwindigkeit erreicht hat.

3. Verfahren nach Anspruch 1 oder 2, wobei der Wert des Absolutwertes der Antriebsgeschwindigkeit der Windentrommel (20) gemäß den folgenden Gleichungen bestimmt wird:

wenn die überwachte Spannung des aufwickelbaren Mediums zwischen der zweiten oberen Spannungsschwelle und dem vorbestimmten Spannungssollwert liegt:

$$|Ref| = AM\_ref*([|Rt-Sp|]/[|T2u-Sp|]),$$

und

wenn die überwachte Spannung des aufwickelbaren Mediums zwischen der zweiten unteren Spannungsschwelle und dem vorbestimmten Spannungssollwert liegt:

$$|Ref| = AM\_ref*([|Rt-Sp|]/[|T2l-Sp|]),$$

wobei:

Ref = die Antriebsgeschwindigkeit der Windentrommel
AM_ref = eine vorbestimmte Konstante
Rt = die überwachte Spannung des aufwickelbaren Mediums
Sp = der vorbestimmte Spannungssollwert
T2u = die zweite obere Spannungsschwelle
T21 = die zweite untere Spannungsschwelle.

4. Verfahren nach Anspruch 1, 2 oder 3, wobei die Windentrommel (20) durch einen Elektromotor (30) angetrieben wird.

5. Verfahren nach Anspruch 4, wobei die Spannung des aufwickelbaren Mediums (10) zwischen dem Schiff und einer Festmachestelle durch Überwachen eines Drehmoments des Elektromotors (30) überwacht wird.

**6.** Verfahren nach Anspruch 5, wobei das Drehmoment des Elektromotors (30) durch Überwachen eines Stroms des Elektromotors überwacht wird.

**7.** Computerprogrammprodukt, umfassend Computerprogrammcode, wobei die Ausführung des Programmcodes in einem Computer, der einen elektrischen Antrieb einer Winde zum Antreiben einer Windentrommel der Winde zum Aufwickeln eines aufwickelbaren Mediums zum Festmachen eines Schiffes steuert, den Computer veranlasst, die Schritte des Verfahrens nach einem der Ansprüche 1 bis 6 durchzuführen.

**8.** Winde, umfassend:

eine Windentrommel (20) zum Aufwickeln eines aufwickelbaren Mediums (10) zum Festmachen eines Schiffes; und
einen Windenantrieb (30, 40, 41) zum Antreiben der Windentrommel, wobei der Windenantrieb dazu ausgelegt ist:

eine Spannung des aufwickelbaren Mediums (10) zwischen dem Schiff und einer Festmachestelle zu überwachen;
als Reaktion darauf, dass die überwachte Spannung des aufwickelbaren Mediums (10) höher als eine erste obere Spannungsschwelle oder niedriger als eine erste untere Spannungsschwelle wird, das Antreiben der Windentrommel (20) entweder sofort oder nach einer ersten vorbestimmten Verzögerung einzuleiten, wobei beim Antreiben der Windentrommel (20), wenn die überwachte Spannung des aufwickelbaren Mediums (10) höher als ein vorbestimmter Spannungssollwert ist, der einen Wert zwischen der ersten oberen Spannungsschwelle und der ersten unteren Spannungsschwelle aufweist, der Windenantrieb dazu ausgelegt ist, die Windentrommel in einer Richtung anzutreiben, in der das aufwickelbare Medium abgewickelt wird, und
wobei beim Antreiben der Windentrommel (20), wenn die überwachte Spannung des aufwickelbaren Mediums (10) niedriger als der vorbestimmte Spannungssollwert ist, der Windenantrieb dazu ausgelegt ist, die Windentrommel in einer Richtung anzutreiben, in der das aufwickelbare Medium aufgewickelt wird; und
als Reaktion darauf, dass die überwachte Spannung des aufwickelbaren Mediums (10) beim Antreiben der Windentrommel (20) für eine zweite vorbestimmte Verzögerung zwischen dem zweiten oberen Spannungsschwellenwert und dem zweiten unteren Spannungsschwellenwert liegt, Anhalten des Antreibens der Windentrommel, **dadurch gekennzeichnet, dass**
beim Antreiben der Windentrommel (20), mindestens wenn die überwachte Spannung des aufwickelbaren Mediums (10) zwischen einer zweiten oberen Spannungsschwelle, die einen Wert gleich oder niedriger als die erste obere Spannungsschwelle, aber höher als der vorbestimmte Spannungssollwert aufweist, und einer zweiten unteren Spannungsschwelle liegt, die einen Wert gleich oder größer als die erste untere Spannungsschwelle, aber niedriger als der vorbestimmte Spannungssollwert aufweist, ein Absolutwert der Antriebsgeschwindigkeit der Windentrommel dazu ausgelegt ist, einen Wert aufzuweisen, der proportional zu einem Absolutwert einer Differenz zwischen der überwachten Spannung des aufwickelbaren Mediums und dem vorbestimmten Spannungssollwert ist.

**9.** Winde nach Anspruch 8, wobei beim Antreiben der Windentrommel (20), wenn die überwachte Spannung des aufwickelbaren Mediums (10) höher als die zweite obere Spannungsschwelle ist, oder wenn die überwachte Spannung des aufwickelbaren Mediums (10) niedriger als die zweite untere Spannungsschwelle ist, der Absolutwert der Antriebsgeschwindigkeit der Windentrommel dazu ausgelegt ist, einen Wert aufzuweisen, der eine vorbestimmte Konstante ist, nachdem die Antriebsgeschwindigkeit der Windentrommel die vorbestimmte konstante Antriebsgeschwindigkeit erreicht hat.

**10.** Winde nach Anspruch 8 oder 9, wobei der Windenantrieb (30, 40, 41) dazu ausgelegt ist, den zweiten Wert des Absolutwerts der Antriebsgeschwindigkeit der Windentrommel (20) gemäß den folgenden Gleichungen zu bestimmen:

wenn die überwachte Spannung des aufwickelbaren Mediums zwischen der zweiten oberen Spannungsschwelle und dem vorbestimmten Spannungssollwert liegt:

```
|Ref| = AM_ref*([|Rt-Sp|]/[|T2u-Sp|]),
```

und

wenn die überwachte Spannung des aufwickelbaren Mediums zwischen der zweiten unteren Spannungsschwelle und dem vorbestimmten Spannungssollwert liegt:

$$|Ref| = AM\_ref*([|Rt-Sp|]/[|T2l-Sp|]),$$

wobei:

Ref = die Antriebsgeschwindigkeit der Windentrommel AM_ref = eine vorbestimmte Konstante
Rt = die überwachte Spannung des aufwickelbaren Mediums
Sp = der vorbestimmte Spannungssollwert
T2u = die zweite obere Spannungsschwelle
T2l = die zweite untere Spannungsschwelle.

11. Winde nach Anspruch 8, 9 oder 10, wobei der Windenantrieb (30, 40, 41) einen Elektromotor (30) zum Antreiben der Windentrommel aufweist.

12. Winde nach Anspruch 11, wobei der Windenantrieb (30, 40, 41) dazu ausgelegt ist, die Spannung des aufwickelbaren Mediums (10) zwischen dem Schiff und einer Festmachestelle durch Überwachen eines Drehmoments des Elektromotors (30) zu überwachen.

13. Winde nach Anspruch 12, wobei der Windenantrieb (30, 40, 41) dazu ausgelegt ist, das Drehmoment des Elektromotors (30) durch Überwachen eines Stroms des Elektromotors zu überwachen.

14. Winde nach einem der Ansprüche 11 bis 13, wobei der Elektromotor (30) ein Wechselstrommotor oder ein Gleichstrommotor ist.

15. Winde nach einem der Ansprüche 8 bis 14, wobei das aufwickelbare Medium (10) ein Kabel, ein Seil, ein Draht oder eine Kette ist.

## Revendications

1. Procédé pour faire fonctionner un treuil comportant un tambour (20) de treuil destiné à enrouler un milieu enroulable (10) servant à amarrer un navire, le procédé comportant les étapes consistant à :

surveiller une tension du milieu enroulable (10) entre le navire et un point d'amarrage ;
en réaction au fait que la tension surveillée du milieu enroulable (10) devienne supérieure à un premier seuil supérieur (T1u) de tension ou inférieure à un premier seuil inférieur (T1l) de tension, déclencher, soit immédiatement soit après une première temporisation prédéterminée, l'entraînement du tambour (20) de treuil, pendant l'entraînement du tambour (20) de treuil, lorsque la tension surveillée du milieu enroulable (10) est supérieure à un point (Sp) de consigne prédéterminé de tension, qui présente une valeur comprise entre le premier seuil supérieur de tension et le premier seuil inférieur de tension, le tambour de treuil étant entraîné dans un sens tel que le milieu enroulable est déroulé, et
pendant l'entraînement du tambour (20) de treuil, lorsque la tension surveillée du milieu enroulable (10) est inférieure au point (Sp) de consigne prédéterminé de tension, le tambour de treuil étant entraîné dans un sens tel que le milieu enroulable est enroulé ; et
en réaction au fait que la tension surveillée du milieu enroulable (10) se situe, pendant l'entraînement du tambour (20) de treuil, entre le second seuil supérieur (T2u) de tension et le second seuil inférieur (T2l) de tension pendant une seconde temporisation prédéterminée, arrêter l'entraînement du tambour de treuil, **caractérisé en ce que**
pendant l'entraînement du tambour (20) de treuil, au moins lorsque la tension surveillée du milieu enroulable (10) se situe entre un second seuil supérieur (T2u) de tension, qui présente une valeur inférieure ou égale au premier seuil supérieur (T1u) de tension mais supérieure au point (Sp) de consigne prédéterminé de tension, et un second seuil inférieur (T2l) de tension, qui présente une valeur supérieure ou égale au premier seuil inférieur (T1l) de tension mais inférieure au point (Sp) de consigne prédéterminé de tension, une valeur absolue de la vitesse d'entraînement du tambour de treuil présente une valeur qui est proportionnelle à la valeur absolue d'une différence entre la tension surveillée du milieu enroulable et le point (Sp) de consigne prédéterminé de tension.

2. Procédé selon la revendication 1, pendant l'entraînement du tambour (20) de treuil, lorsque la tension surveillée du milieu enroulable (10) est supérieure au second seuil supérieur (T2u) de tension, ou lorsque la tension surveillée du milieu enroulable (10) est inférieure au second seuil inférieur (T2l) de tension, la valeur absolue de la vitesse d'entraînement du tambour de treuil présentant une valeur qui est une constante prédéterminée après que la vitesse d'entraînement du tambour de treuil a atteint ladite vitesse d'entraînement constante prédéterminée.

3. Procédé selon la revendication 1 ou 2, la valeur de la valeur absolue de la vitesse d'entraînement du tambour (20) de treuil étant déterminée selon les équations suivantes :

lorsque la tension surveillée du milieu enroulable se situe entre le second seuil supérieur de tension et le point de consigne prédéterminé de tension :

$$|Ref| = AM\_ref*([|Rt-Sp|]/[|T2u-Sp|]),$$

et
lorsque la tension surveillée du milieu enroulable se situe entre le second seuil inférieur de tension et le point de consigne prédéterminé de tension :

$$|Ref| = AM\_ref*([|Rt-Sp|]/[|T2l-Sp|]),$$

où :

Ref vitesse d'entraînement du tambour de treuil
AM_ref constante prédéterminée
Rt tension surveillée du milieu enroulable
Sp point de consigne prédéterminé de tension
T2u second seuil supérieur de tension
T2l second seuil inférieur de tension.

4. Procédé selon la revendication 1, 2 ou 3, le tambour (20) de treuil étant entraîné par un moteur électrique (30).

5. Procédé selon la revendication 4, la tension du milieu enroulable (10) entre le navire et un point d'amarrage étant surveillée en surveillant un couple du moteur électrique (30).

6. Procédé selon la revendication 5, le couple du moteur électrique (30) étant surveillé en surveillant un courant du moteur électrique.

7. Produit de programme informatique comportant du code de programme informatique, l'exécution du code de programme dans un ordinateur commandant un moyen d'entraînement électrique d'un treuil pour entraîner un tambour de treuil du treuil destiné à enrouler un milieu enroulable servant à amarrer un navire amenant l'ordinateur à réaliser les étapes du procédé selon l'une quelconque des revendications 1 à 6.

8. Treuil comportant :

un tambour (20) de treuil destiné à enrouler un milieu enroulable (10) servant à amarrer un navire ; et
un moyen (30, 40, 41) d'entraînement de treuil destiné à entraîner le tambour de treuil, le moyen d'entraînement de treuil étant configuré pour :

surveiller une tension du milieu enroulable (10) entre le navire et un point d'amarrage ;
en réaction au fait que la tension surveillée du milieu enroulable (10) devienne supérieure à un premier seuil supérieur de tension ou inférieure à un premier seuil inférieur de tension, déclencher, soit immédiatement soit après une première temporisation prédéterminée, l'entraînement du tambour (20) de treuil, pendant l'entraînement du tambour (20) de treuil, lorsque la tension surveillée du milieu enroulable (10) est supérieure à un point de consigne prédéterminé de tension, qui présente une valeur comprise entre le premier seuil supérieur de tension et le premier seuil inférieur de tension, le moyen d'entraînement de treuil étant configuré pour entraîner le tambour de treuil dans un sens tel que le milieu enroulable est déroulé, et pendant l'entraînement du tambour (20) de treuil, lorsque la tension surveillée du milieu enroulable (10) est inférieure au point de consigne prédéterminé de tension, le moyen d'entraînement de treuil étant configuré pour entraîner le tambour de treuil dans un sens tel que le milieu enroulable est enroulé ; et en réaction au fait que la tension surveillée du milieu enroulable (10) se situe, pendant l'entraînement du tambour (20) de treuil, entre le second seuil supérieur de tension et le second seuil inférieur de tension pendant une seconde temporisation prédéterminée, arrêter l'entraînement du tambour de treuil, **caractérisé en ce que**
pendant l'entraînement du tambour (20) de treuil, au moins lorsque la tension surveillée du milieu enroulable (10) se situe entre un second seuil supérieur de tension, qui présente une valeur inférieure ou égale au premier seuil supérieur de tension mais supérieure au point de consigne prédéterminé de tension, et un second seuil inférieur de tension, qui présente une valeur supérieure ou égale au premier seuil inférieur de tension mais inférieure au point de consigne prédéterminé de tension, une valeur absolue de la vitesse d'entraînement du tambour de treuil est configurée pour présenter une valeur qui est proportionnelle à la valeur absolue d'une différence entre la tension surveillée du milieu enroulable et le point de consigne prédéterminé de tension.

9. Treuil selon la revendication 8, pendant l'entraînement du tambour (20) de treuil, lorsque la tension surveillée du milieu enroulable (10) est supérieure au second seuil supérieur de tension ou lorsque la tension surveillée du milieu enroulable (10) est inférieure au second seuil inférieur de tension, la valeur absolue de la vitesse d'entraînement du tambour de treuil étant configuré pour présenter une valeur qui est une constante prédéterminée après que la vitesse d'entraînement du tambour de treuil a atteint ladite vitesse d'entraînement constante prédéterminée.

10. Treuil selon la revendication 8 ou 9, le moyen (30, 40, 41) d'entraînement de treuil étant configuré pour déterminer la seconde valeur de la valeur absolue de la vitesse d'entraînement du tambour (20) de treuil selon les équations suivantes :

lorsque la tension surveillée du milieu enroulable se situe entre le second seuil supérieur de tension et le point de consigne prédéterminé de tension :

$$|Ref| = AM\_ref*([|Rt-Sp|]/[|T2u-Sp|]),$$

et
lorsque la tension surveillée du milieu enroulable se situe entre le second seuil inférieur de tension et le point de consigne prédéterminé de tension :

$$|Ref| = AM\_ref*([|Rt-Sp|]/[|T2l-Sp|]),$$

où :

Ref vitesse d'entraînement du tambour de treuil
AM_ref constante prédéterminée
Rt tension surveillée du milieu enroulable
Sp point de consigne prédéterminé de tension
T2u second seuil supérieur de tension
T2l second seuil inférieur de tension.

11. Treuil selon la revendication 8, 9 ou 10, le moyen (30, 40, 41) d'entraînement de treuil comportant un moteur électrique (30) destiné à entraîner le tambour de treuil.

12. Treuil selon la revendication 11, le moyen (30, 40, 41) d'entraînement de treuil étant configuré pour surveiller la tension du milieu enroulable (10) entre le navire et un point d'amarrage en surveillant un couple du moteur électrique (30).

**13.** Treuil selon la revendication 12, le moyen (30, 40, 41) d'entraînement de treuil étant configuré pour surveiller le couple du moteur électrique (30) en surveillant un courant du moteur électrique.

**14.** Treuil selon l'une quelconque des revendications 11 à 13, le moteur électrique (30) étant un moteur à courant alternatif ou un moteur à courant continu.

**15.** Treuil selon l'une quelconque des revendications 8 à 14, le milieu enroulable (10) étant un câble, une corde, un fil ou une chaîne.

Fig. 1

Fig. 2

EP 3 192 766 B1

## Fig. 3

Speeds in different regions

| | |
|---|---|
| | Ref = -AM_ref |
| T1u | Ref = -AM_ref |
| T2u | Ref = -AM_ref*([|Rt-Sp|]/[|T2u-Sp|]) |
| Sp | Ref = AM_ref*([|Rt-Sp|]/[|T2l-Sp|]) |
| T2l | Ref = AM_ref |
| T1l | Ref = AM_ref |
| 0 | |

tension

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2385011 A